# EUROPÄISCHE PATENTANMELDUNG

(11) **EP 1 350 952 A1**
(43) Veröffentlichungstag der Anmeldung: **08.10.2003**
(21) Anmeldenummer: 02007563.6
(22) Anmeldetag: 03.04.2002
(51) Int. Cl.: F03D 3/04, F03D 7/06, F03D 3/06

(54) **Windkraftanlage mit senkrechter Drehachse**

(71) Anmelder: Van der Roer, Humphrey, 1782 Belfaux (CH)
(72) Erfinder: Van der Roer, Humphrey, 1782 Belfaux (CH)
(74) Vertreter: EGLI-EUROPEAN PATENT ATTORNEYS

(57) **Zusammenfassung**

Es wird eine Windkraftanlage mit einem vertikalen Rotor (10) und einer Vielzahl von am Rotor (10) angebrachten Rotorschaufeln (20) zum Antrieb des Rotors (10) vorgeschlagen. Die Anlage weist ein radial um den Rotor (10) angeordnetes Leitelementsystem (60) mit einem Boden (62), einem Deckel (64) und einer Vielzahl von im wesentlichen radial ausgerichteten Leitelementen (66) auf, wobei die Leitelemente (66) in ihrem radialen Innenbereich in Richtung der Tangentialfläche des Rotors hin gebogen sind. Die Rotorschaufeln (20) weisen einen inneren Bereich (24), in dem sie von dem auf ihnen anliegenden Luftstrom zumindest teilweise durchströmt werden können, und einen äusseren Bereich (26) auf, in dem sie von dem auf ihnen anliegenden Luftstrom nicht durchströmt werden können. In einer besonders vorteilhaften Ausgestaltung der Erfindung weist der Deckel (66) des Leitelementgehäuses (60) öffenbare Klappen (68) auf, wobei die Klappen (68) durch die auf den Deckel (66) wirkende Schwerkraft geschlossen sind, wenn der im Leitelementgehäuse (60) wirkende Winddruck einen bestimmten Wert unterschreitet, und sich öffnen, wenn der im Leitelementgehäuse (60) wirkende Winddruck einen bestimmten Wert überschreitet. Der Grad der Öffnung hängt vom Mass des Winddruckexzesses ab.

## Beschreibung

Die Erfindung betrifft eine Windkraftanlage zur Erzeugung von Energie, insbesondere von elektrischer Energie. Insbesondere betrifft die Erfindung eine solche Anlage, bei der der sich bewegende Rotor im wesentlichen senkrecht zur Strömungsrichtung steht und bei der der Windstrom durch Leitelemente geführt wird. Weiterhin betrifft die Erfindung ein Verfahren zum Betreiben einer Windkraftanlage durch Steuern oder Regeln von Leitelementen bei unterschiedlichen Windverhältnissen.

Windkraftanlagen zur Erzeugung von Energie, auch von elektrischer Energie, sind seit langer Zeit bekannt. In vielen Gegenden mit einer Hauptwindrichtung wurden solche Anlagen lange Zeit als Windmühlenart gebaut, nach der die Rotorachse im wesentlichen parallel zur Hauptwindrichtung angeordnet ist. Sobald sich eine Windänderung ergibt, muss die Rotorachse in der Ebene der Geländeoberfläche nachgeführt werden. Dies führt zunächst einmal dazu, dass bezüglich der Energiegewinnung und dem Nachführen zwei völlig unabhängige, orthogonale Bewegungen vorgesehen werden müssen. In Gegenden, in denen sich die Windrichtung schnell ändert, also insbesondere in Gegenden, in denen keine bevorzugte Hauptwindrichtung vorherrscht, kann alleine diese Bedingung schon zu einer Einschränkung der Betriebsmöglichkeit der Windkraftanlage führen, wenn nämlich die Nachführbandbreite der Rotorachse nicht die Bandbreite der zu erwartenden Richtungsänderungen erreichen kann.

In der Literatur ist - unter anderem zur Lösung des vorstehend beschriebenen Problems - häufig vorgeschlagen worden, das Prinzip eines Windrades, wie es z.B. zur Messung der Windgeschwindigkeit verwendet wird, auch zur Energiegewinnung einzusetzen. Schon in der US-A-4 508 973, in der DE-A-27 32 508, in der FR-A-2 509 801, in der DE-A-199 20 560 und in der GB-A-2 049 066 wurde dabei vorgeschlagen, Leitelemente um die Rotoren anzuordnen. In der US-A-4 508 973 wird vorgeschlagen, die Leitelemente so anzuordnen, dass der Luftstrom in eine vertikale Richtung, nämlich nach oben, umgelenkt wird, um einen Rotor mit einer zur Windrichtung senkrecht stehenden Achse mit Flügelelementen verwenden zu können. Diese Lösung ist insbesondere wegen der Umlenkung des Luftstromes in vielen Anwendungsfällen nicht akzeptabel, kann aber bei bestimmten Anwendungen durchaus in Betracht gezogen werden. In der DE-A-199 20 560 wird ein turmartiges Gebilde als Einleitsystem für den Luftstrom vorgeschlagen, bei dem der Rotor mit aerodynamisch ausgestalteten Flügeln versehen ist. Die Ausdehnung und die Geometrie der beweglichen Teile einer solchen Konstruktion haben sich jedoch als besonders nachteilig erwiesen, besonders bei unterschiedlichen Windverhältnissen (Böen). Weiterhin ist der turmartige Aufbau in vielen Fällen baulich nicht akzeptabel. Die in der FR-A-2 509 801 dagegen ist technisch und baulich so kompliziert entworfen, dass es - im Rahmen der vorliegenden Erfindung - gilt, diese komplizierte Konstruktion erheblich zu vereinfachen, insbesondere in Bezug auf die beweglichen Teile. Besonders nachteilig erscheint die in der DE-A-27 32 508 vorgeschlagene Lösung. Während nämlich in der DE-A-199 20 560 immerhin schon erkannt wurde, dass für eine brauchbare Energieerzeugung ein optimiertes Durchströmen von Luft wesentlich ist, so wird in der DE-A-27 32 508 noch vorgeschlagen, die Energiegewinnung auf den Winddruck - und nicht auf die Windströmung - abzustellen. Am besten erfüllt die Einrichtung nach GB-A-2 049 066 die Anforderungen an eine Windkrafteinrichtung, bei der insbesondere Massnahmen getroffen werden, um Überlastung durch bis zu orkanartigen Böen zu vermeiden. Im Falle der GB-A-2 049 066 wird bei einem ebenfalls turmartigen Gebilde vorgeschlagen, eine Hebeeinrichtung für eine teleskopartige Wandung vorzusehen, die dann entweder manuell oder durch einen Windsensor bedient wird. Auch in dieser - am weitesten fortgeschrittenen - Entwicklung verbleiben Nachteile, nämlich die Auslegung als Turm, die dort notwendig ist, um eine Effizienz der veränderbaren Wallstruktur zu ermöglichen, sowie die "manuelle" oder sensorgetriebene Auslegung der veränderbaren Wallstruktur, die noch immer anfällig erscheint.

Die vorstehend beschriebenen Probleme mit den bekannten Windkraftanlagen gilt es also durch die vorliegende Erfindung zu lösen. Insbesondere soll die Anlage nicht auf eine mehrschichtige Turmkonstruktion angewiesen sein, die beweglichen Teile sollen minimiert werden, eine manuelle Bedienung - auch als Reaktion auf die Windstärke und selbstverständlich auf die Windrichtung - sowie besondere Sensoren sollen vermieden werden. Andererseits soll die Anlage robust und dennoch effektiv ausgelegt werden können.

Die Erfindung löst die Aufgabe durch eine Anlage nach Anspruch 1. Dabei haben die Massnahmen der Erfindung zunächst einmal zur Folge, dass von der Windströmung und nicht vom Winddruck Gebrauch gemacht werden kann, dass die Strömungsverhältnisse effektiv ausgelegt werden können und dass die Anlage andererseits besonders robust ist. Weiterhin ist die Windkraftanlage gemäss der vorliegenden Erfindung leicht zu bauen, leicht zu warten, einfach zu betreiben und besonders effektiv für eine modulare Auslegung (gleiche Komponenten bei unterschiedlichem Anforderungsprofil bezüglich Baubedingungen, Windbedingungen etc.) geeignet.

Besonders vorteilhaft ist es, die Oberseite des Leitelementgehäuses mit Klappen auszubilden, die sich in Folge böenartig erhöhten Winddruckes mechanisch selbstständig öffnen, wobei der Öffnungsgrad abhängig ist vom Winddrucküberschuss über den ausgelegten maximalen Winddruck. Dadurch wird erreicht, dass weder eine manuelle Massnahme noch ein besonderes Sensorpaket bei unterschiedlichen Windstärken notwendig ist. So kann alleine durch die Schwerkraft der öffenbaren Klappen eine Regelung der Ableitung der überschüssigen Windströmung erreicht werden. Weiterhin besonders vorteilhaft ist es, die genannte Schwerkraftregelung dadurch einstellbar zu machen, dass ein an den Klappen angebrachtes Gewicht radial verschiebbar ausgebildet ist und so die Regelkonstante eingestellt werden kann.
Weitere vorteilhafte Einzelheiten der Erfindung sind in den Unteransprüchen dargelegt. Dem Fachmann wird klar sein, dass einzelne Massnahmen, die in den Unteransprüchen vorgeschlagen sind, durchaus eigenen erfinderischen Charakter aufweisen, da die in den Unteransprüchen vorgeschlagenen Massnahmen besondere, teilweise unerwartete Effekte auslösen.

Für den Fall, dass die Windkraftanlage gemäss der vorliegenden Erfindung in einer geographischen Lage betrieben werden soll, in der eine Hauptwindrichtung vorherrscht, kann aus Kostengründen und aus Gründen sonstiger Vereinfachung das Windleitsystem auf einen Einfallbereich von ca. 180° beschränkt werden, was zu Einsparungen von bis zu 50% führen kann.

In einem weiteren unabhängigen Anspruch wird ein Verfahren zur Erzeugung von Energie aus Windkraft, insbesondere von elektrischer Energie dargelegt mit den Vorteilen der vorliegenden Erfindung.

Die vorgenannten sowie die beanspruchten und in den nachfolgenden Ausführungsbeispielen beschriebenen erfindungsgemäss zu verwendenden Elemente unterliegen in ihrer Grösse, Formgestaltung, Materialverwendung und technischen Konzeption keinen besonderen Ausnahmebedingungen, so dass die in dem jeweiligen Anwendungsgebiet bekannten Auswahlkriterien uneingeschränkt Anwendung finden können.

Weitere Einzelheiten, Merkmale und Vorteile des Gegenstandes der Erfindung ergeben sich aus der nachfolgenden Beschreibung der dazugehörigen Zeichnungen, in denen - beispielhaft - eine Windkraftanlage gemäss der vorliegenden Erfindung und ein dazugehöriger Verfahrensablauf zur vorliegenden Erfindung erläutert wird.

In den Zeichnungen zeigen:
- Figur 1: eine Ansicht auf die wesentlichen Elemente der Windkraftanlage gemäss der vorliegenden Erfindung von der Seite;

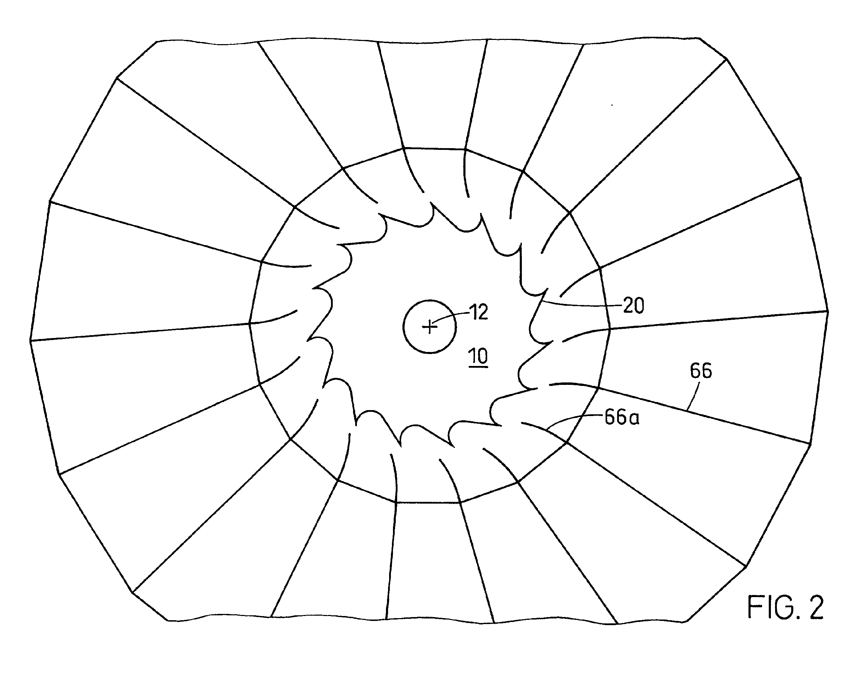

- Figur 2: eine Ansicht auf den Rotor und die Leitelemente gemäss der vorliegenden Erfindung von oben;
- Figur 3: eine Detailansicht gemäss Figur 2;

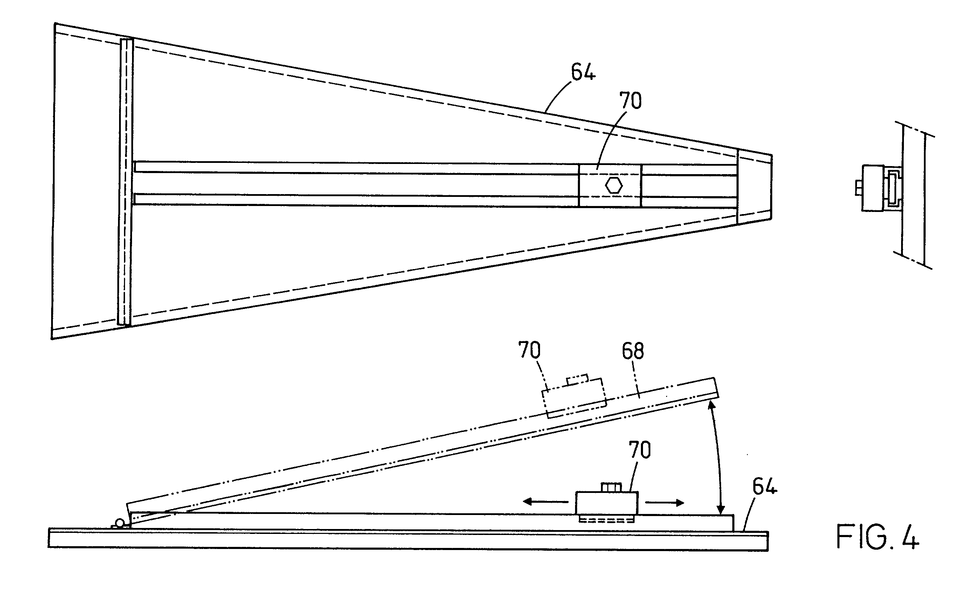

- Figur 4: die Ausbildung der Gewichtselemente gemäss einer besonders vorteilhaften Ausgestaltung der Erfindung und
- Figur 5: eine Ansicht auf den Rotor nach Figur 2 von der Seite.

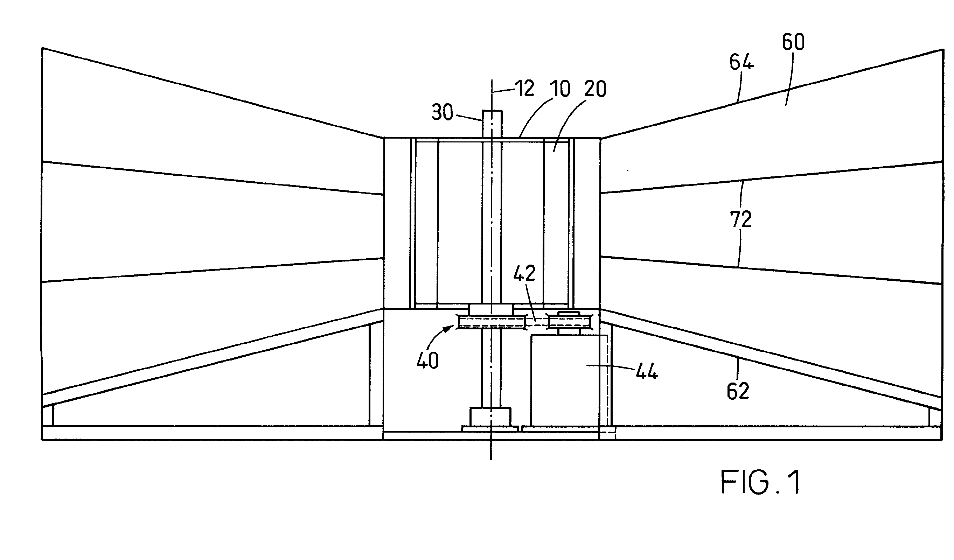

Der in Figur 1 mit 10 bezeichnete Rotor weist eine Vielzahl von Schaufeln 20 zum Antrieb des Rotors durch strömende Luftmasse auf. Der Rotor 10, dessen Drehachse 12 im wesentlichen senkrecht zur Ebene des zu erwartenden Windes ausgerichtet ist, ist auf einer senkrecht stehenden Achse 30 drehbar aufgesetzt.

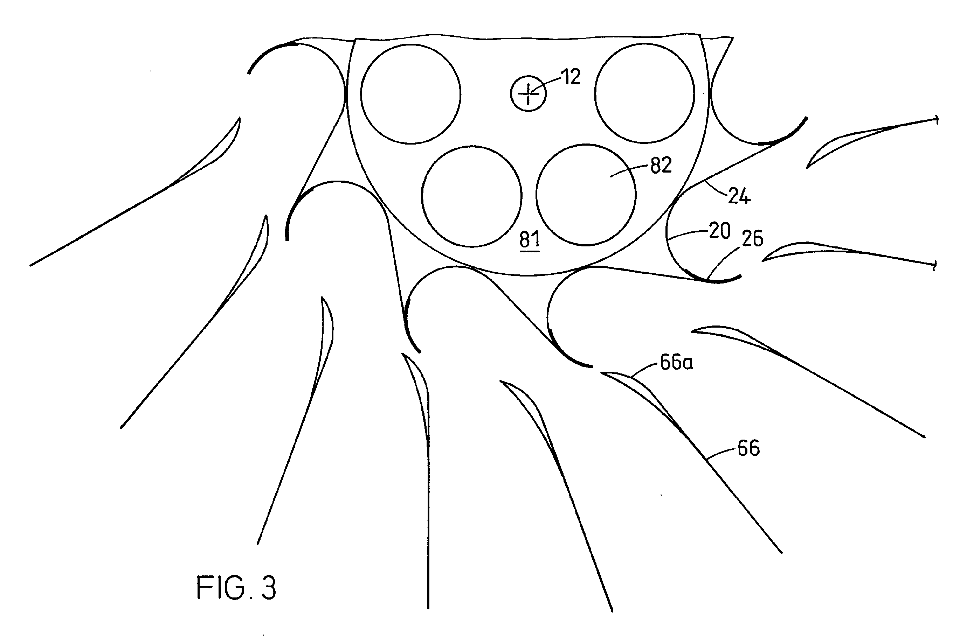

Wie in Figur 3 dargestellt, haben die Rotorschaufeln jeweils einen inneren Bereich 24, in dem sie von dem auf ihnen anliegenden Luftstrom zumindest teilweise durchströmt werden können und jeweils einen äusseren Bereich 26, in dem sie von dem auf ihnen anliegenden Luftstrom nicht durchströmt werden können. Im vorliegenden Ausführungsbeispiel wird dieser Effekt dadurch ausgebildet, dass im Bereich 24 die Rotorschaufel ein orthogonales Gittersystem mit einer Fläche von ca. 55% und einem entsprechenden Zwischenraum von vorzugsweise ca. 45% aufweist, während im Bereich 26 die Rotorschaufel 20 eine geschlossene Fläche aufweist. Diese Zahlenangaben stellen bestimmte Ausgestaltungen gemäss dem vorliegenden Ausführungsbeispiel dar und müssen jeweils neu dimensioniert werden, wenn sich dies aus strömungstechnischen oder anderen Gründen - welcher Art auch immer - als sinnvoll herausstellt. Dabei sind Flächenverhältnisse von 33% bis 66% typisch.

Im Ausführungsbeispiel sind die Rotorschaufeln 20 geometrisch mit einem ersten, im wesentlichen flachen oder auch konkav ausgeformten Teil und einem sich daran anschliessenden, im wesentlichen zylindersegmentförmigen Teil ausgebildet. Um den Rotor 10 herum ist ein Leitelementsystem 60 mit einem Boden 62, einem Deckel 64 und einer Vielzahl von im wesentlichen radial ausgerichteten Leitelementen 66 angeordnet. Die Leitelemente 66 sind in ihrem radialen Innenbereich 66a in Richtung der Tangentialfläche des Rotors hin gebogen oder - alternativ - gewölbt. In der Windkraftanlage des vorliegenden Ausführungsbeispiels ist die Zahl der Rotorschaufeln 20 geringer als die Zahl der radialen Leitelemente 66. Dies hat den Effekt, dass ein Schaufelelement 20 nicht nur von der Luftmasse eines Leitelementes angeblasen wird, und damit den besonderen Vorteil, dass bessere Strömungsverhältnisse gewährleistet werden. Bei anderen vorliegenden Strömungsverhältnissen kann das Zahlenverhältnis aber anders gewählt werden.

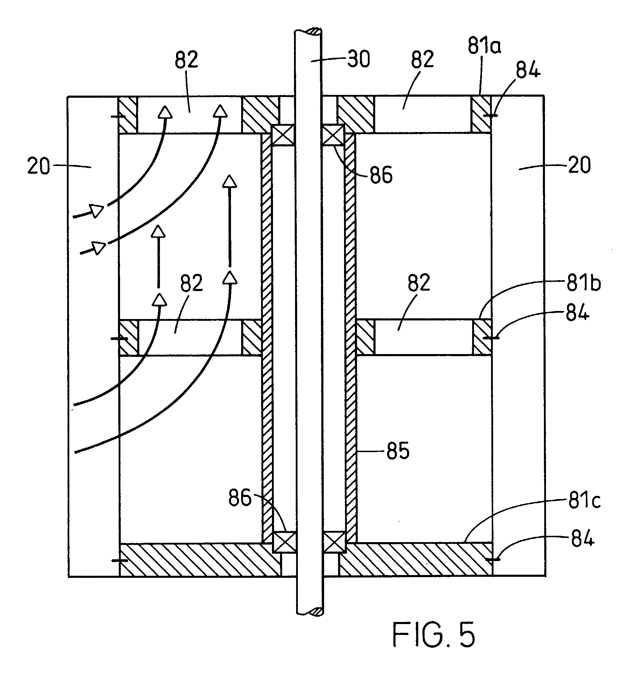

Zum Zwecke der besseren Durchströmung des Luftstromes ist der Rotor 10 - ebenso wie das Leitelementsystem 60 - in (im Ausführungsbeispiel zwei) Teile vertikal aufgeteilt, wie in Figur 5 detailliert dargestellt. Diese Aufteilung wird durch ein Rotormittelteil 81b ausgeführt. In diesem Rotormittelteil 81b sind - ebenso wie im Rotoroberteil - im Ausführungsbeispiel sechs kreisrunde Durchlassöffnungen 82 als Kaminelemente ausgebildet. Diese Konstruktion mit einem Rotormittelteil 81b, einem Rotorboden 81c und einem Rotoroberteil 81a hat sich als besonders vorteilhaft herausgestellt, einerseits eine gute Durchströmung zu gewährleisten und andererseits die eingeströmte Luft gegebenenfalls nach oben ableiten zu können. Die Rotorschaufeln 20 sind im Ausführungsbeispiel mit Befestigungselementen 82 an dem Rotormittelteil 81b, dem Rotorboden 81c und dem Rotoroberteil 81a befestigt.

Im unteren Teil des Rotors 10 ist eine Kraftübertragungseinrichtung 40 angebracht, mit der ein Kraftübertragungsband 42 angetrieben wird, welches wiederum einen seitlich stehenden elektrischen Generator 44 antreibt.

In einer alternativen Ausführungsform sind die Rotorschaufeln als Vollgitter ausgebildet. Dabei kann in einer solchen Ausführung vorgesehen sein, dass nicht jede Schaufel, sondern nur jede zweite oder dritte ein Gitter aufweist. Dies führt zu einer hohen Modularität, da das Durchströmungsverhältnis zum Zwecke der Überwindung des Anlaufdrehmomentes je nach der zu erwartenden Windstärke angepasst werden kann. Darüber hinaus bewirkt die Massnahme der teilweise gitterförmig ausgestalteten Rotorschaufeln 20 eine gute Dämpfung von zu erwartender Böenwirkung.

Im vorliegenden Ausführungsbeispiel wird jedoch zur Böendämpfung eine weitere Sicherungsmassnahme vorgesehen. Im Deckel 66 des Leitelementgehäuses 60 sind öffenbare Klappen 68 ausgebildet. Während die Klappen 68 durch die auf den Deckel 66 wirkende Schwerkraft geschlossen sind, wenn der im Leitelementgehäuse 60 wirkende Winddruck einen bestimmten Wert unterschreitet, öffnen sie sich, wenn der im Leitelementgehäuse 60 wirkende Winddruck einen bestimmten Wert überschreitet. Im vorliegenden Ausführungsbeispiel hängt der Grad der Öffnung vom Mass des Winddruckexzesses ab (analoge Regelung). Alternativ kann auch vorgesehen werden, dass die verschiedenen Klappen 68 einen unterschiedlichen Grenzwert aufweisen und so die Menge des abgeleiteten Windes von der Zahl der geöffneten Klappen abhängt (digitale Regelung). Im vorliegenden Ausführungsbeispiel wird der besagte Grenzwert und der Grad des Öffnens in Abhängigkeit vom Winddruckexzess durch ein Gewichtselement 70 eingestellt. Das Gewichtselement 70 ist als Radialschieber an jeder Klappe ausgebildet.

Das Leitelementsystem 60 ist mit horizontalen Leitelementen 72 ausgerüstet, die zum Zwecke der Wirksamkeit der vorstehend genannten Klappen 68 im Deckel 64 des Leitelementsystems 60 mit Öffnungen (Löchern oder Gitter) versehen sind und damit eine vertikale Luftströmung ermöglichen, wenn die Klappen 68 geöffnet sind.

Beim Einstellen und Anpassen der Windkraftanlage werden zunächst einmal die zu erwartenden maximalen Windverhältnisse und die stärksten Böen ermittelt, z.B. durch eine Messreihe. An diese Verhältnisse wird dann das Durchlässigkeitsverhältnis der Rotorschaufeln und/oder die Öffnungsverhältnisse der Klappen 68 im Deckel 64 angepasst, um einerseits die gewünschten Energieerzeugungsverhältnisse und andererseits die Bruchsicherheit zu gewährleisten. Die Anpassung kann dabei mit Hilfe von Simulationen und/oder durch eine Messreihe im Windkanal durchgeführt werden.

Der Fachmann wird erkennen, dass eine Windkraftanlage mit einem Rotor 10, dessen Drehachse 12 im wesentlichen senkrecht zur Ebene des zu erwartenden Windes ausgerichtet ist, einer Vielzahl von am Rotor 10 angebrachten Rotorblättern oder Rotorschaufeln 20 zum Antrieb des Rotors 10, einer am Rotor 10 angebrachten Kraftübertragungseinrichtung 40 auf einen elektrischen Generator 44 oder auf eine andere Einrichtung zur Verwendung der gewonnenen Energie, einem radial um den Rotor 10 angeordneten Leitelementsystem 60 mit einem Boden 62, einem Deckel 64 und einer Vielzahl von im wesentlichen radial ausgerichteten Leitelementen 66, alleine schon durch die Massnahme vorteilhaft ist, dass der Deckel 64 des Leitelementgehäuses 60 öffenbare Klappen 68 aufweist, insbesondere wenn die Klappen 68 durch die auf den Deckel 64 wirkende Schwerkraft geschlossen sind, wenn der im Leitelementgehäuse 60 wirkende Winddruck einen bestimmten Wert unterschreitet und sich öffnen, wenn der im Leitelementgehäuse 60 wirkende Winddruck einen bestimmten Wert überschreitet. Dies gilt insbesondere dann, wenn der Grad der Öffnung vom Mass des Winddruckexzesses abhängt und/oder der besagte Wert und/oder der Grad des Öffnens in Abhängigkeit vom Winddruckexzess durch ein Gewichtselement 70 einstellbar ist.

## Patentansprüche

1. Windkraftanlage mit
- einem Rotor (10), dessen Rotorachse (12) im wesentlichen senkrecht zur Ebene des zu erwartenden Windes ausgerichtet ist,
- einer Vielzahl von am Rotor (10) angebrachten Rotorblättern oder Rotorschaufeln (20) zum Antrieb des Rotors (10),
- einer am Rotor (10) angebrachten Kraftübertragungseinrichtung (40, 42) auf einen elektrischen Generator (44) oder auf eine andere Einrichtung zur Verwendung der gewonnenen Energie,
- einem radial um den Rotor (10) angeordneten Leitelementsystem (60) mit einem Boden (62), einem Deckel (62) und einer Vielzahl von im wesentlichen radial ausgerichteten Leitelementen (66), wobei die Leitelemente (66) in ihrem radialen Innenbereich in Richtung der Tangentialfläche des Rotors (10) hin gebogen oder gewölbt sind,
**dadurch gekennzeichnet, dass**
- die Rotorblätter oder Rotorschaufeln (10) jeweils einen inneren Bereich aufweisen, in dem sie von dem auf ihnen anliegenden Luftstrom zumindest teilweise durchströmt werden können.

2. Windkraftanlage nach Anspruch 1, **dadurch gekennzeichnet, dass** die Rotorblätter oder Rotorschaufeln (10) jeweils einen äusseren Bereich aufweisen, in dem sie von dem auf ihnen anliegenden Luftstrom nicht durchströmt werden können.

3. Windkraftanlage nach einem der Ansprüche 1 oder 2, **dadurch gekennzeichnet, dass** die Vielzahl von Rotorblätter oder Rotorschaufeln (10) unterschiedliche Durchströmungsverhältnisse aufweisen.

4. Windkraftanlage nach einem der vorstehenden Ansprüche, **dadurch gekennzeichnet, dass** der Rotor (10) auf eine feste, vertikal ausgerichtete Achse (30) aufgesetzt ist.

5. Windkraftanlage nach einem der vorstehenden Ansprüche, **dadurch gekennzeichnet, dass** die Kraftübertragungseinrichtung aus einem Band (42), einer Kette oder einem gleichwirkenden Element ausgebildet ist und die gewonnene Energie auf einen elektrischen Generator (44) mit einer zur Rotorachse (10) im wesentlichen parallelen Achse übertragen werden kann.

6. Windkraftanlage nach einem der vorstehenden Ansprüche, **dadurch gekennzeichnet, dass** die Zahl der Rotorblätter oder Rotorschaufeln (10) geringer ist als die Zahl der radialen Leitelemente (66).

7. Windkraftanlage nach einem der vorstehenden Ansprüche, **gekennzeichnet durch** Rotorschaufeln (20) mit einem ersten, im wesentlichen flachen Teil und einem sich daran anschliessenden im wesentlichen zylindersegmentförmigen Teil.

8. Windkraftanlage nach Anspruch 7, **dadurch gekennzeichnet, dass** die Rotorschaufel (10) in mehreren Ebenen im Bereich ihres zylindersegmentförmigen Teils an mehreren scheibenartig ausgebildeten Elementen (81a, 81b, 81c) angebracht sind.

9. Windkraftanlage nach Anspruch 8, **dadurch gekennzeichnet, dass** zumindest ein Teil der scheibenartig ausgebildeten Elemente (81a, 81b, 81c) Öffnungen (82) aufweisen, die eine vertikale Strömung der Luft ermöglichen.

10. Windkraftanlage nach einem der vorstehenden Ansprüche, **dadurch gekennzeichnet, dass** der Deckel (64) des Leitelementgehäuses öffenbare Klappen (68) aufweist.

11. Windkraftanlage nach Anspruch 10, **dadurch gekennzeichnet, dass** die Klappen (68) durch die auf den Deckel (64) wirkende Schwerkraft geschlossen sind, wenn der im Leitelementgehäuse (60) wirkende Winddruck einen bestimmten Wert unterschreitet, und sich öffnen, wenn der im Leitelementgehäuse (60) wirkende Winddruck einen bestimmten Wert überschreitet.

12. Windkraftanlage nach Anspruch 11, **dadurch gekennzeichnet, dass** der Grad der Öffnung vom Mass des Winddruckexzesses abhängt.

13. Windkraftanlage nach Anspruch 11 oder 12, **dadurch gekennzeichnet, dass** der besagte Wert und/oder der Grad des Öffnens in Abhängigkeit vom Winddruckexzess durch ein Gewichtselement (70) einstellbar ist.

14. Windkraftanlage nach Anspruch 13, **dadurch gekennzeichnet, dass** das Gewichtselement (70) als Radialschieber ausgebildet ist.

15. Windkraftanlage nach einem der vorstehenden Ansprüche, **dadurch gekennzeichnet, dass** das Leitelementsystem (60) horizontale Leitelemente (72) aufweist, wobei die horizontalen Leitelemente (72) so ausgebildet sind, dass sie eine vertikale Luftströmung erlauben.

16. Verfahren zur Erzeugung von Energie, insbesondere von elektrischer Energie, insbesondere mit einer Windkraftanlage nach einem der Ansprüche 1 bis 15,
**dadurch gekennzeichnet, dass**
- die Windkraftanlage an die Wind- und Böenverhältnisse angepasst werden, indem die Rotorschaufeln soweit durchlässig gemacht werden und/oder eine Windableitung im Deckel so eingestellt wird, dass die erwartenden Böen keine Beschädigungen der Anlage erwarten lassen.
